# EUROPÄISCHE PATENTSCHRIFT

(11) **EP 0 719 061 B1**
(45) Veröffentlichungstag und Bekanntmachung des Hinweises auf die Patenterteilung: **10.03.2004**
(21) Anmeldenummer: 95119831.6
(22) Anmeldetag: 15.12.1995
(51) Int. Cl.: H04Q 3/66

(54) **Verfahren und Anordnung zum Bilden von Routinginformationen in einem Kommunikationsnetz**
Method and arrangement for the establishment of routing information in a communication network
Procédé et arrangement pour l'établissement d'informations de routage dans un réseau de communication

(30) Priorität: 21.12.1994 DE 4445800
(43) Veröffentlichungstag der Anmeldung: 26.06.1996
(73) Patentinhaber: SIEMENS AKTIENGESELLSCHAFT, 80333 München (DE)
(72) Erfinder: Hummel, Heinrich, Dipl.-Math, D-85232 Bergkirchen (DE); Tietsch, Michael, Dipl.-Ing., D-86916 Kaufering (DE)

(56) Entgegenhaltungen:
- EP-A- 0 386 607
- US-A- 4 974 224
- YOUNG CHUL PARK ET AL: "ROUTE OPTIMIZATION USING THE FDL PATH IN HYBRID SWITCHING NETWORKS" IEICE TRANSACTIONS, Bd. E74, Nr. 12, Dezember 1991, Seiten 4007-4016, XP000294909 ISSN: 0917-1673

## Beschreibung

Kommunikationsnetze weisen üblicherweise eine Netztopologie auf, die im wesentlichen durch die Anzahl, Position und dem Verkehrsaufkommen von an den Netzknoten angeschlossenen Teilnehmern bzw. Kommunikationsendgeräten beeinflußt ist. Die Netzknoten sind durch Verbindungsleitungen untereinander verbunden, wobei die Kapazität der Verbindungsleitungen auf die Verkehrsbeziehungen zwischen den Kommunikationsendgeräten bzw. den Netzknoten abgestimmt werden soll. Zur Bestimmung der Verkehrswerte der Verkehrsbeziehungen zwischen den Netzknoten werden die optimalsten Routen, z.B. die kürzesten Verbindungswege zwischen den Netzknoten ermittelt und das Verkehrsaufkommen zwischen den Netzknoten über die optimalsten Routen gemessen und die Kapazität der Verbindungsleitungen geeignet dimensioniert, soweit dies aufgrund von administrativen oder geographischen Beschränkungen oder von Kapazitätbeschränkungen vorhandener Verbindungsleitungen möglich ist. Alternativ wird von langfristig empirisch ermittelten Verkehrsmittelwerten ausgegangen, die die Berechnungsbasis bei der Dimensionierung von Verbindungsleitungen zwischen Netzknoten eines Kommunikationsnetzes darstellen. Die Verkehrsmittelwert-Dimensionierung der Verbindungsleitungen führt in der Hauptverkehrszeit zur Überlastung einzelner Verbindungsleitungen. Üblicherweise werden bei derartigen Überlastfällen die Verkehrsbeziehungen nicht mehr über die jeweils optimalsten Routen, sondern über eine weniger optimale Route vermittelt. Hierbei werden die optimalsten Routen hinsichtlich der Minimierung der Gesamtlänge einer Route, der Anzahl der Transitnetzknoten, der Verzögerungszeiten bei der Übertragung - z.B. Satellitenstrecken - und der anfallenden Gebühren bzw. Betriebskosten ausgewählt bzw. bestimmt. Weniger optimale Routen stellen beispielsweise längere Routen dar, die insbesondere gegenüber der optimalen Route über mehr Netzknoten geführt sind. Eine weitere Überlastung der Verbindungsleitungen bzw. des Kommunikationsnetzes führt zur Vermittlung der Verkehrsbeziehung über weitere, noch ungünstigere Routen. Hierbei werden in Abhängigkeit von der Größe bzw. von der Ausdehnung des Kommunikationsnetzes 1 bis maximal r optimale Routen für die Verkehrsbeziehungen zwischen den Netzknoten bestimmt, d.h. zugelassen. Dies bedeutet, daß bei einer Überlastung des Kommunikationsnetzes, bei der eine Verkehrsbeziehung über keine der optimalen Routen mehr möglich ist, die Verkehrsbeziehung nicht mehr zugelassen wird. Die Bestimmung der 1 bis maximal r Routen definiert folglich die maximale Anzahl von Routen von jeweils einem Netzknoten zu einem weiteren Netzknoten k über alle Netzknoten betrachtet. Für eine Verkehrsbeziehung von einem Netzknoten i zu einem Netzknoten k sind r^{ik} Routen, d.h. für die jeweilige Verkehrsbeziehung Anzahl optimalster Routen bestimmt. Bei der Vermittlung von Verkehrsbeziehungen ist für die Suche nach einer noch freien Route bzw. Verbindungsleitung eine vermittlungstechnische Rechnerleistung erforderlich, die insbesondere bei der Überlastung des Kommunikationsnetzes zu einer erheblichen Reduzierung der vermittlungstechnischen Gesamtleistung sowohl der einzelnen Netzknoten als auch des Kommunikationsnetzes führt. Des weiteren ist durch die Suche nach der jeweils optimalen Route in abfallender Reihenfolge keine paritätische, d.h. gleichberechtigte Vermittlung von Verkehrsbeziehungen gegeben, da durch eine aktuelle Belegung einer Verbindungsleitung bzw. der optimalsten Route durch eine Verkehrsbeziehung diese für eine weitere angeforderte Verkehrsbeziehung ebenfalls optimalste Route nicht mehr verfügbar ist.

In EP0386607 und US4974224 werden Verfahren zum Bilden von Routinginformationen zur Vermittlung von Verkehrsbeziehungen beschrieben. In EP0386607 werden diese Routinginformationen durch die Lösung eines linearen oder quadratischen Programms zur Minimierung der Netzblockierung ermittelt. In US4974224 werden die Routinginformationen durch eine Heuristik auf Basis von Verzögerungszeiten ermittelt.

Die der Erfindung zugrundeliegende Aufgabe besteht darin, Routinginformation zu bilden, mit deren Hilfe in einem Kommunikationsnetz eine paritätische sowie eine davon abweichende Vermittlung von Verkehrsbeziehungen unter Einbeziehung von für die jeweilige Verkehrsbeziehung ermittelten optimalsten Routen möglich ist. Die Aufgabe wird ausgehend von einem Verfahren gemäß den Merkmalen des Oberbegriffs des Patentanspruch 1, wie bekannt aus EP 0 386 607, durch dessen kennzeichnende Merkmale gelöst.

Der wesentliche Aspekt des erfindungsgemäßen Verfahren besteht darin, daß jeder in die erste optimale Route einbezogenen Verbindungsleitung ein Verkehrswert-Quantum zugeordnet und vom jeweiligen Verkehrsbeziehungs-Verkehrswert subtrahiert wird. Die Verkehrsbeziehungs-Verkehrswerte stellen die empirisch oder durchschnittlich ermittelten Verkehrswerte der Verkehrsbeziehungen jeweils einer Route zwischen Ursprungs- und einem Zielnetzknoten dar.

Die Verkehrswert-Quanten sind auf die Höhe der Verkehrsbeziehungs-Verkehrswerte und die Kapazität bzw. Größe der Verbindungsleitungen abzustimmen - Anspruch 2. Beispielsweise ist für eine Verkehrsbeziehung mit einem Verkehrsbeziehungs-Verkehrswert von beispielsweise 15 Erlang und einer Kapazität der Verbindungsleitung, d.h. einem Verbindungsleitungs-Verkehrswert von 10 Erlang ein Verkehrswert-Quantum von 1 Erlang vorteilhaft.

Die Zuordnung und Subtraktion der Verkehrswert-Quanten wird wiederholt durchgeführt, wobei die zugeordneten Verkehrswert-Quanten je Verbindungsleitung summiert werden. Bei Überschreiten der summierten Verkehrswert-Quanten über einen der Verbindungsleitungs-Verkehrswerte werden die folgenden bzw. verbleibenden Verkehrswert-Quanten der betroffenen Verkehrsbeziehung den in die jeweils folgende optimale Route einbezogenen Verbindungsleitungen zugeordnet. Bei Unterschreiten eines jeweiligen Verkehrsbeziehungs-Verkehrswertes unter einen vorgegebenen Wert - vorteilhaft 0 Erlang - wird die Zuordnung von Verkehrswert-Quanten für die jeweilige, betroffene Verkehrsbeziehung beendet. Dies bedeutet, daß diejenigen Verkehrsbeziehungen aus der Zuordnung der Verkehrswert-Quanten herausgenommen werden, deren Verkehrsbeziehungs-Verkehrswerte iterativ den Verbindungsleitungen zugeordnet sind. Anschließend werden die zugeordneten Verkehrswert-Quanten jeweils einer Verkehrsbeziehung verbindungsleitungsindividuell zu Verkehrsverteilwerten summiert, die routenindividuell in der Reihenfolge der Routen summiert und entsprechend einem statistischen Unter- und Oberwert zu Routinginformationen normiert werden.

Mit dem erfindungsgemäßen Verfahren werden folglich die Werte für eine statistische Verteilfunktion, d.h. die Wahrscheinlichkeitszahlen wj^{(ik)}, mit 1<j<r^{(ik)} ermittelt, mit deren Hilfe eine der r^{(ik)} Routen statistisch ausgewählt wird, um im statistischen Mittel die angestrebte paritätische oder eine davon abweichende Vermittlung von Verkehrsbeziehungen zu erreichen.

Gemäß einer vorteilhaften Weiterbildung des erfindungsgemäßen Verfahren wird bei paritätischer Vermittlung aller Kommunikationsbeziehungen im Kommunikationsnetz den zuzuordnenden Verkehrswert-Quanten der Verkehrsbeziehungen ein gleich großer Wert zugeordnet - Anspruch 3. Bei nichtparitätischen bzw. priorisierenden Vermittlungen von Verkehrsbeziehungen im Kommunikationsnetz wird den zuzuordnenden Verkehrswert-Quanten der zu priorisierenden Verkehrsbeziehungen ein gegenüber den Verkehrswert-Quanten der nicht prorisierten Verkehrsbeziehungen höherer Wert zugeordnet - Anspruch 4. Durch die Zuordnung von unterschiedlichen Werten zu den Verkehrswert-Quanten ist eine besonders vorteilhafte, annähernd willkürliche Mischung von paritätischer und priorisierender Vermittlung von Verkehrsbeziehungen in einem Kommunikationsnetz. Dies bedeutet eine universelle Einsetzbarkeit der erfindungsgemäß gebildeten Routinginformationen für unterschiedlichste Anwendungen.

Besonders vorteilhaft wird das Verfahren zum Bilden von Routinginformationen in einem Kommunikationsnetz verwendet. Hierbei wird vor einer Informationsvermittlung von einem Ursprungs- zu einem Zielnetzknoten im Rahmen eines Verbindungsaufbaus für Verkehrsbeziehungen in den Ursprungs- und in den Transitknoten ein zwischen dem statischen Verteilunter- und dem Verteiloberwert liegender Zufallsverteilwert bestimmt und mit den Routinginformationen verglichen. In Abhängigkeit von dem Vergleichsergebnis wird die Verkehrsbeziehung aufgebaut und die Information an die durch den Zufallsverteilwert bestimmte Verbindungsleitung vermittelt.

Weitere vorteilhafte Ausgestaltungen des erfindungsgemäßen Verfahren sowie eine Anordnung zur Durchführung der erfindungsgemäßen Verfahren sind den weiteren Ansprüchen zu entnehmen.

Im folgenden wird das erfindungsgemäße Verfahren und deren Verwendung anhand von drei figürlichen Darstellungen näher erläutert. Dabei zeigen
- FIG 1: in einem Blockschaltbild beispielhaft die Topologie eines Kommunikationsnetzes,
- FIG 2: den prinzipiellen Aufbau einer für jede Verkehrsbeziehung und jeden Netzknoten vorgesehenen Tabelle und
- FIG 3: Routinginformationen für eine Verkehrsbeziehung in einem Netzknoten.

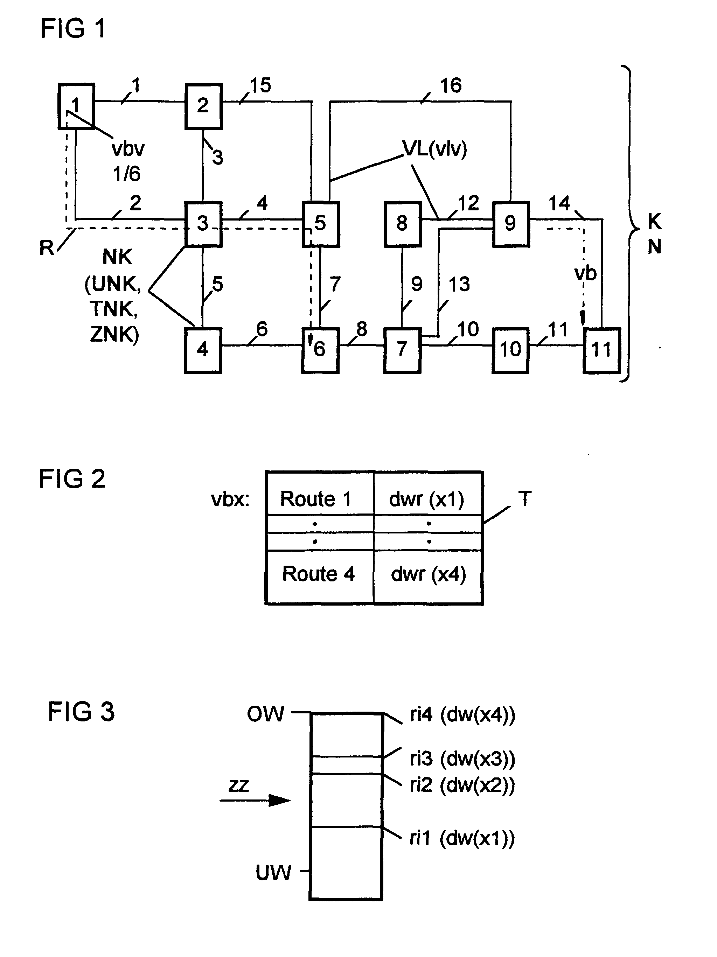

FIG 1 zeigt beispielhaft die Topologie eines Kommunikationsnetzes KN, das durch n = 11 Netzknoten KN1..11 und durch m = 16 Verbindungsleitungen VL1..16 gebildet ist. Eine detaillierte Beschreibung des Kommunikationsnetzes KN fehlt, da die weiteren Erläuterung des erfindungsgemäßen Verfahrens auf eine beliebige Anzahl von Netzknoten NK und Verbindungsleitungen VL bezogen ist.

Erfindungsgemäß werden zuerst die 1 bis r optimalen Routen R der Verkehrsbeziehungen zwischen den Netzknoten NK1..11 ermittelt, wobei die maximale Anzahl von optimalen Routen rₘₐₓ auf eine Anzahl begrenzt ist, die auf den maximalen Speicherplatzbedarf für die Routeninformationen in einer Kommunikationsnetzeinrichtung - nicht dargestellt - abgestimmt ist. Bezogen auf das Ausführungsbeispiel sind beispielsweise für eine Verkehrsbeziehung zwischen dem ersten und dem sechsten Netzknoten NK1, NK6 fünf Routen R sinnvoll bzw. möglich. Die erste Route R ist über die erste, fünfzehnte, und siebte Verbindungsleitung VL 1,15,7 und den zweiten und fünften Netzknoten NK 2,5, die zweite Route R über die zweite, vierte und siebte Verbindungsleitung VL 2,4,7 sowie über den dritten und fünften Netzknoten NK 3,5 - ist in FIG 1 durch strichlierte Linien beispielhaft dargestellt -, die dritte Route R über die zweite, fünfte und sechste Verbindungsleitung VL 2,5,6 sowie über den dritten und vierten Netzknoten NK 3,4, die vierte Route R über die erste, dritte, vierte und siebte Verbindungsleitung VL 1,3,4,7 sowie den zweiten, dritten und fünften Netzknoten NK 2,3,5 und die fünfte Route R über die erste, dritte, fünfte und sechste Verbindungsleitung VL 1,3,5,6 sowie den zweiten, dritten und vierten Netzknoten geführt. Routen R, die Schleifen enthalten oder die über sehr viele Netzknoten geführt werden, bleiben unberücksichtigt und kommen auch nicht als Ersatzrouten in Betracht. Weitere Einschränkungen hinsichtlich der Routenauswahl sind beispielsweise durch Qualitätsanforderungen, Verkehrswertgrenzen und beschränkte Anzahl von in eine Route einbezogenen Netzknoten NK zu beachten. Derartige Beschränkungen bzw. Randbedingungen werden durch routenindividuelle oder verbindungsleitungsindividuelle Parameter bei dem erfindungsgemäßen Bilden von Routinginformationen berücksichtigt.

Für das dargestellte und auch andere Kommunikationsnetze KN mit beliebiger Topologie werden für jede Verkehrsbeziehung von den n Netzknoten zu den n - 1 Netzknoten diskrete Vermittlungsfunktionen, d.h. die Wahrscheinlichkeiten w ermittelt, mit welcher die jeweilige Route R von 1 bis r ermittelten Routen R einer Verkehrsbeziehung vb beim Verbindungsaufbau ausgewählt wird. Diese Wahrscheinlichkeiten w aller n * (n-1) Vermittlungsfunktionen werden basierend auf den Verkehrsbeziehungs-Verkehrswerten vbv, d.h. auf den Verkehrswerten, die zwischen einem Ursprungs- und einem Zielknoten (ZNK) gemessen oder ermittelt werden, mit Hilfe des erfindungsgemäßen Verfahrens bestimmt. Die Wahrscheinlichkeiten w repräsentieren hierbei einen Verkehrsverteilwert dw einer diskreten statistischen Vermittlungsfunktion. Diese n * (n - 1) Verkehrsverteilwerte dw werden erfindungsgemäß dadurch gebildet, daß beispielsweise den Verkehrsverteilwerten dw, bei Null Erlang beginnend, sukzessive ein Verkehrswert-Quantum - z.B. ein Erlang - zugeordnet wird, das jeweils vom betroffenen Verkehrsbeziehungs-Verkehrswert vbv subtrahiert wird. Pro Iterationsschritt wird folglich der Wert des Verkehrsverteilwertes dw um 1 - d.h. 1 Erlang - inkrementiert und der betroffene Verkehrsbeziehungs-Verkehrswert vbv um 1 dekrementiert. Ist auf einer der ersten Routen R1 keine Übertragungskapazität mehr verfügbar, so wird das Zuordnen bzw. Subtrahieren von Verkehrswert-Quanten vq mit einer der zweiten und, sofern diese keine Kapazität mehr aufweist, mit einer der folgenden optimalen Route R3.. usw. durchgeführt.

Kann ein Rest von einem Verkehrsbeziehungs-Verkehrswert vbv einer Verkehrsbeziehung vb keiner der 1 bis r optimalen Routen R mehr zugeordnet werden, da keine der 1 bis r optimalen Routen R mehr eine Übertragungskapazität aufweist, so wird dieser Kapazitätsengpaß mit Hilfe des erfindungsgemäßen Verfahren erfaßt und kann angezeigt werden. Analog hierzu sind Überkapazitäten der 1 bis r Routen R durch das erfindungsgemäße Verfahren erfaßt- und anzeigbar.

Anschließend werden die routenindividuellen Verkehrsverteilwerte dw auf die m Verbindungsleitungen VL bezogen. Dies bedeutet, daß bezogen auf das Ausführungsbeispiel m * n * (n - 1)= 1760 - d.h. 16*11*10 - Verkehrsverteilwerte dw berechnet werden. Unter Berücksichtigung von bidirektionalen Verkehrsbeziehungen vb ergibt sich eine Verdoppelung der Anzahl der zu ermittelnden Verkehrsverteilwerte dw.

Die ermittelten Verkehrsverteilwerte dw werden dahingehend weiterbearbeitet, daß bei einem Verbindungsaufbau lediglich die in Zielnetzknoten ZNK wirkenden Verkehrsverteilwerte dw interessant sind, d.h. jeder Transitnetzknoten TNK muß bezüglich des Zielnetzknotens ZNK die hierzu geeigneten Routen R einschließlich des jeweiligen Verkehrsverteilwertes dw in Zielknotenrichtung kennen. Folglich werden die Verkehrsverteilwerte dw jeweils einer Route R in beide Übermittlungsrichtungen aufsummiert, wodurch 2 * m * (n - 1) summierte routenindividuelle Verkehrsverteilwerte dwr gebildet werden.

Anschließend werden für jeden Transitnetzknoten TNK, gegliedert nach Zielnetzknoten ZKN, eine Tabelle von Verkehrsverteilwerte-Paaren dwr erstellt, wobei bei bidirektionalen Verkehrsbeziehungen vb die beiden Verkehrswertebereiche dwr auf jeweils eine der beiden Übermittlungsrichtungen bezogen sind.

In die für einen Transitnetzknoten TNK vorgesehene Tabelle wird ein Verkehrsverteilwerte-Paar bezüglich des Zielnetzknotens ZNK aufgenommen, sofern folgende Bedingungen erfüllt sind:
- Die Zielnetzknoteninformation ZNK stimmt überein,
- die angegebene Route R ist unmittelbar über den Netzknoten NK geführt und
- der Verkehrsverteilwert dwr muß größer als Null sein.

Unter den vorhergehend erläuterten Voraussetzungen wird für jeden Transitnetzknoten TNK des Kommunikationsnetzes KN je Zielnetzknoten ZKN eine Tabelle gebildet. In FIG 2 ist beispielhaft der prinzipielle Aufbau einer derartigen Tabelle T angedeutet.

Die gebildeten Tabellen T werden an jeweils die betreffenden Transitnetzknoten TNK des Kommunikationsnetzes KN übermittelt, in diesen normiert und in absolute Routinginformationen ri umgeformt. Hierzu werden, beginnend mit Null, die Verkehrsverteilwerte dwr für jede Verkehrsbeziehung vb in Reihenfolge der jeweils an dem betreffenden Transitnetzknoten TNK auftretenden Routen R summiert und sowohl die Summenzwischenwerte als auch der Summenwert auf einen statischen Oberwert OW, z.B. 100, und statistischen Unterwert UW, z.B. 0, bezogen, d.h. normiert. Hierdurch entstehen Stufenwerte dw(x1) bis dw(x4), die die eigentlichen Routinginformationen ri repräsentieren. Mit Hilfe dieser Routinginformationen ri wird während eines Verbindungsaufbaus einer Verkehrsbeziehung vb von einem zu einem anderen Netzknoten NK ausgewählt, über welche der möglichen 1 bis r optimalen Routen R, d.h. letztlich über welche der Verbindungsleitungen VL die Verkehrsbeziehung vb vermittelt wird. Hierzu wird während des Verbindungsaufbaus in einem Transitnetzknoten TNK beispielsweise mit Hilfe eines Zufallsgenerators eine Zufallszahl zz gebildet, die zwischen dem statischen Oberwert OW - z.B. 100 - und dem statistischen Unterwert, z.B. Null liegt. Je nach dem zwischen welchen beiden Routinginformationen ri die gebildeten Zufallszahl zz liegt, wird die zugeordnete Route R und damit Verbindungsleitung VL ausgewählt und die Verkehrsbeziehung vb über die ausgewählte Route R weiter aufgebaut. Diese Prozedur wird ausgehend vom Ursprungsnetzknoten UNK in den Transitnetzknoten TNK solange wiederholt, bis der Zielnetzknoten ZNK erreicht ist.

FIG 3 zeigt beispielhaft die Routinginformationen ri in einem Netzknoten NK für eine Verkehrsbeziehung vb. Es sind vier Routinginformation ri1 bis maximal ri4 dargestellt, die beispielsweise auf einen statistischen Oberwert OW und Unterwert UW normiert sind. Da die gebildete Zufallszahl zz zwischen der ersten und zweiten Routinginformation liegt, wird die zweite Route R2 aus den vier möglichen optimalen Routen R1..4 ausgewählt. Die nicht dargestellte Verkehrsbeziehung vb wird über die zweite Route R2 aufgebaut. In der Praxis wird eine die zweite Route R2 repräsentierende Verbindungsleitung VL ausgewählt. Die Verknüpfung zwischen Routen R und Verbindungsleitungen VL ist in den vermittlungstechnischen Speichereinrichtungen der Netzknoten NK gespeichert.

Das vorhergehend erläuterte, erfindungsgemäße Verfahren und deren Anwendung ist besonders vorteilhaft in einer rechnergesteuerten, zentralen Kommunikationsnetzeinrichtung - nicht dargestellt - programmtechnisch realisiert, wobei die hierbei gebildeten Tabellen T an die betreffenden Netzknoten NK übermittelt und in diesen weiterverarbeitet werden. Die zentrale Kommunikationsnetzeinrichtung ist alternativ einem Netzknoten NK zuordenbar.

## Patentansprüche

1. Verfahren zum Bilden von Routinginformationen (ri) für Verkehrsbeziehungen (vb) in einem Kommunikationsnetz (KN) mit beliebiger Topologie mit n Netzknoten (NK) und m Verbindungsleitungen (VL) mit jeweils einem vorgegebenen Verbindungsleitungs-Verkehrswert (vlv), bei dem für jede Verkehrsbeziehung (vb) von jedem der n Neztknoten zu jedem der weiteren n-1 Netzknoten 1 bis maximal r optimale, bidirektionale Routen (R) ermittelt werden, wobei ein Verkehrsbeziehungs-Verkehrswert (vbv) für jede Verkehrsbeziehung (vb) bestimmt ist,
**dadurch gekennzeichnet,**
- **daß** jeder in die jeweils ersten optimalen Routen (R1) einer Verkehrsbeziehung (vb) einbezogenen Verbindungsleitung (VL) ein Verkehrswert-Quantum (vq) zugeordnet und vom jeweiligen Verkehrsbeziehungs-Verkehrswert (vbv) subtrahiert wird,
- **daß** die Zuordnung und Subtraktion der Verkehrswert-Quanten (vq) wiederholt durchgeführt wird, wobei die zugeordneten Verkehrswert-Quanten (vq) je Verbindungsleitung (VL) summiert werden,
- **daß** bei Überschreiten der summierten Verkehrswert-Quanten (vq) über einen der Verbindungsleitungs-Verkehrswerte (vlv) die folgenden Verkehrswert-Quanten (vq) der betroffenen Verkehrsbeziehung (vb) den in die jeweils folgende optimale Route (R2 bis Rr) einbezogenen Verbindungsleitungen (VL) zugeordnet werden,
- **daß** bei Unterschreiten eines jeweiligen Verkehrsbeziehungs-Verkehrswertes (vbv) unter einen vorgegebenen Wert die Zuordnung von Verkehrswert-Quanten (vq) für die jeweilige, betroffene Verkehrsbeziehung (vb) beendet wird,
- **daß** die den Routen (R) zugeordneten Verkehrswert-Quanten (vq) einer Verkehrsbeziehung (vb) routenindividuell zu Verkehrsverteilwerten (dw) summiert werden,
- **daß** für jeden verkehrsbeziehungsrelevanten Ursprungs- und Transitnetzknoten (UNK, ZKN) die Verkehrsverteilwerte (dw) summiert und entsprechend einem statistischen Unter- und Oberwert (UW,OW) zu Routinginformationen (ri) normiert werden.

2. Verfahren nach Anspruch 1,
**dadurch gekennzeichnet,**
**daß** die Größe des Verkehrswert-Quantum (vq) auf die Kapazität der Verbindungsleitungen (VL) und die Größe des Verkehrsbeziehungs-Verkehrwertes (vbv) abgestimmt ist.

3. Verfahren nach Anspruch 1 oder 2,
**dadurch gekennzeichnet,**
**daß** bei paritätischer Vermittlung aller Verkehrsbeziehungen (vb) im Kommunikationsnetz (KN) den zuzuordnenden Verkehrswert-Quanten (vq) ein gleich großer Wert zugeordnet wird.

4. Verfahren nach Anspruch 1 oder 2,
**dadurch gekennzeichnet,**
**daß** bei priorisierender Vermittlung von Verkehrsbeziehungen (vb) im Kommunikationsnetz (KN) den zuzuordnenden Verkehrswert-Quanten (vq) der zu priorisierenden Verkehrsbeziehungen (vb) ein gegenüber den Verkehrswert-Quanten (vq) der nicht priorisierten Verkehrsbeziehungen (vb) höherer Wert (w) zugeordnet wird.

5. Verfahren nach einem der vorhergehenden Ansprüche,
**dadurch gekennzeichnet,**
**daß** die Routinginformationen (ri) eine in Richtung Zielknoten (ZKN) wirkende, die der ausgewählten Route (R) zugeordnete Verbindungsleitung (VL) bestimmende vermittlungstechnische Leitweginformation repräsentiert.

6. Verfahren nach einem der vorhergehenden Ansprüche,
**dadurch gekennzeichnet,**
**daß** die Routinginformation (ri) eine eine bidirektionale oder unidirektionale Route (R) auswählende vermittlungstechnische Leitweginformation repräsentiert.

7. Verfahren nach einem der vorhergehenden Ansprüche,
**dadurch gekennzeichnet,**
**daß** die 1 bis maximal r optimalen Routen (R) in Abhängigkeit von einer Mindest- oder Höchstqualität von Verbindungsleitungen (VL), einer maximaler Übertragungskapazität der einzelnen Verbindungsleitungen (VL), einer maximalen Anzahl von seriell anordenbaren Verbindungsleitungen (VL) und/oder Netzknoten (NK) bestimmbar ist.

8. Verfahren nach einem der vorhergehenden Ansprüche,
**dadurch gekennzeichnet,**
**daß** im Rahmen des Verbindungsaufbaus für eine Verkehrsbeziehung (vb) von einem Ursprungs- zu einem Zielnetzknoten (UKN, ZNK) in den Ursprungs- und in den Transitnetzknoten (UKN, ZKN) ein zwischen dem statischen Verteilunter- und dem Verteiloberwert (UW, OW) liegender Zufallsverteilwert (zz) bestimmt und mit den Routinginformationen (ri) verglichen wird, und daß in Abhängigkeit von dem Vergleichsergebnis die Verkehrsbeziehung (vb) an die durch den Zufallsverteilwert bestimmte Verbindungsleitung (VL) vermittelt wird.

9. Anordnung zum Bilden von Routinginformationen (ri) für Verkehrsbeziehungen (vb) in einem Kommunikationsnetz (KN) mit beliebiger Topologie mit n Netzknoten (NK) und m Verbindungsleitungen (VL) mit jeweils einen vorgegebenen Verbindungsleitungs-Verkehrswert (vlv), bei dem für jede Verkehrsbeziehung (vb) von jedem der n Neztknoten zu jedem der weiteren n-1 Netzknoten 1 bis maximal r optimale, bidirektionale Routen (R) ermittelt werden, wobei ein Verkehrsbeziehungs-Verkehrswert (vbv) für jede Verkehrsbeziehung (vb) bestimmt ist,
**dadurch gekennzeichnet,**
**daß** im Kommunikationsnetz (KN) Mittel derart ausgestaltet sind,
- **daß** jeder in die erste optimale Route (R1) einbezogenen Verbindungsleitung (VL) ein Verkehrswert-Quantum (vq) zugeordnet und vom jeweiligen Verkehrsbeziehungs-Verkehrswert (vbv) subtrahiert wird,
- **daß** die Zuordnung und Subtraktion der Verkehrswert-Quanten (vq) wiederholt durchgeführt wird, wobei die zugeordneten Verkehrswert-Quanten (vq) je Verbidungsleitung (VL) summiert werden,
- **daß** bei Überschreiten der summierten Verkehrswert-Quanten (vq) über einen der Verbindungsleitungs-Verkehrswerte (vlv) die folgenden Verkehrswert-Quanten (vq) der betroffenen Verkehrsbeziehung (vb) den in die jeweils folgende optimale Route (R2 bis Rr) einbezogenen Verbindungsleitungen (VL) zugeordnet werden,
- **daß** bei Unterschreiten eines jeweiligen Verkehrbeziehungs-Verkehrswertes (vbv) unter einen vorgegebenen Wert die Zuordnung von Verkehrswert-Quanten (vq) für die jeweilige, betroffene Verkehrsbeziehung (vb) beendet wird,
- **daß** die den Routen (R) zugeordneten Verkehrswert-Quanten (vq) einer Verkehrsbeziehung (vb) routenindividuell zu Verkehrsverteilwerten (dw) summiert werden,
- **daß** für jeden verkehrsbeziehungsrelevanten Ursprungs- und Transitnetzknoten (UNK, TKN) die Verkehrsverteilwerte (dw) summiert und entsprechend einem statistischen Unter- und Oberwert (UW, OW) zu Routinginformationen (ri) normiert werden.

## Claims

1. Method for forming routing information (ri) for traffic relationships (vb) in a communications network (KN) having any desired topology with n network nodes (NK) and m connecting lines (VL), each having a predetermined connecting line traffic value (vlv), in which from one up to a maximum of r optimum bidirectional routes (R) are determined for each traffic relationship (vb) from each of the n network nodes to each of the other n-1 network nodes, with a traffic relationship traffic value (vbv) being determined for each traffic relationship (vb),
**characterized**
- **in that** each connecting line (VL) which is included in the respective first optimum route (R1) of a traffic relationship (vb) is allocated a traffic value quantum (vq) and is subtracted from the respective traffic relationship traffic value (vbv),
- **in that** the allocation and the subtraction of the traffic value quanta (vq) are carried out repeatedly, with the associated traffic value quanta (vq) for each connecting line (VL) being added,
- **in that**, if the added traffic value quanta (vq) are greater than one of the connecting line traffic values (vlv), the following traffic value quanta (vq) for the relevant traffic relationship (vb) are allocated to the connecting lines (VL) which are included in the respective subsequent optimum route (R2 to Rr),
- **in that**, if the respective traffic relationship traffic value (vbv) is less than a predetermined value, the allocation of a traffic value quanta (vq) for the respective traffic relationship (vb) that is affected is ended,
- **in that** the traffic value quanta (vq) which are allocated to the routes (R) for a traffic relationship (vb) are added on a route-specific basis to form traffic distribution values (dw),
- **in that** the traffic distribution values (dw) are added for each source and transient network node (UNK, ZKN) which is relevant to the traffic relationship and are normalized on the basis of a statistical lower value and upper value (UW, OW) to form routing information (ri).

2. Method according to Claim 1,
**characterized**
**in that** the magnitude of the traffic value quantum (vq) is matched to the capacity of the connecting lines (VL) and to the magnitude of the traffic relationship traffic value (vbv).

3. Method according to Claim 1 or 2,
**characterized**
**in that** a value of equal magnitude is allocated to the traffic value quanta (vq) to be associated, for parity switching of all the traffic relationships (vb) in the communications network (KN).

4. Method according to Claim 1 or 2,
**characterized**
**in that**, for prioritizing switching of traffic relationships (vb) in the communications network (KN), a value (w) which is higher than the traffic value quanta (vq) of the non-prioritized traffic relationships (vb) is allocated to the traffic value quanta (vq) to be allocated for the traffic relationships (vb) to be prioritized.

5. Method according to one of the preceding claims,
**characterized**
**in that** the routing information (ri) represents switching routing information which acts in the direction of the destination nodes (ZKN) and which determines the connecting line (VL) associated with the chosen route (R).

6. Method according to one of the preceding claims,
**characterized**
**in that** the routing information (ri) represents switching routing information which chooses a bidirectional or unidirectional route (R).

7. Method according to one of the preceding claims,
**characterized**
**in that** the from 1 to a maximum of r optimum routes (R) can be determined as a function of a minimum quality or maximum quality of connecting lines (VL), of a maximum transmission capacity of the individual connecting lines (VL), and of a maximum number of connecting lines (VL) and/or network nodes (NK) which can be arranged in series.

8. Method according to one of the preceding claims,
**characterized**
**in that**, in the course of setting up a connection for a traffic relationship (vb) from a source network node (UKN) to a destination network node (ZNK) a random distribution value (zz), which is between the statistical distribution lower value (UW) and the distribution upper value (OW), is determined in the source network nodes (UKN) and in the transient network nodes (ZKN), and is compared with the routing information (ri), and in that the traffic relationship (vb) is passed to the connecting line (VL) as determined by the random distribution value, as a function of the comparison result.

9. Arrangement for forming routing information (ri) for traffic relationships (vb) in a communications network (KN) having any desired topology with n network nodes (NK) and m connecting lines (VL), each having a predetermined connecting line traffic value (vlv), in which from one up to a maximum of r optimum bidirectional routes (R) are determined for each traffic relationship (vb) from each of the n network nodes to each of the other n-1 network nodes, with a traffic relationship traffic value (vbv) being determined for each traffic relationship (vb),
**characterized**
**in that** means in the communications network (KN) are designed in such a way
- that each connecting line (VL) which is included in the first optimum route is allocated a traffic value quantum (vq) and is subtracted from the respective traffic relationship traffic value (vbv),
- that the allocation and the subtraction of the traffic value quanta (vq) are carried out repeatedly, with the associated traffic value quanta (vq) for each connecting line (VL) being added,
- that, if the added traffic value quanta (vq) are greater than one of the connecting line traffic values (vlv), the following traffic value quanta (vq) for the relevant traffic relationship (vb) are allocated to the connecting lines (VL) which are included in the respective subsequent optimum route (R2 to Rr),
- that, if the respective traffic relationship traffic value (vbv) is less than a predetermined value, the allocation of a traffic value quanta (vq) for the respective traffic relationship (vb) that is affected is ended,
- that the traffic value quanta (vq) which are allocated to the routes (R) for a traffic relationship (vb) are added on a route-specific basis to form traffic distribution values (dw),
- that the traffic distribution values (dw) are added for each source and transient network node (UNK, ZKN) which is relevant to the traffic relationship and are normalized on the basis of a statistical lower value and upper value (UW, OW) to form routing information (ri).

## Revendications

1. Procédé pour l'établissement d'informations de routage (ri) pour des relations de trafic (vb) dans un réseau de communication (KN) de topologie quelconque avec n noeuds de réseau (NK) et m lignes de liaison (VL) avec une valeur de trafic de ligne de liaison (vlv) donnée dans chaque cas, dans lequel 1 à maximum r routes (R) optimales bidirectionnelles sont déterminées pour chaque relation de trafic (vb), de chacun des n noeuds de réseau vers chacun des autres n-1 noeuds de réseau, une valeur de trafic de relation de trafic (vbv) étant définie pour chaque relation de trafic (vb), **caractérisé en ce que**
- un quantum de valeur de trafic (vq) est affecté à chaque ligne de liaison (VL) intégrée dans les chaque premières routes optimales (R1) d'une relation de trafic (vb) et est soustrait de la valeur de trafic de relation de trafic (vbv) concernée;
- l'affectation et la soustraction des quanta de valeur de trafic (vq) sont répétées, les quanta de valeur de trafic (vq) affectés étant additionnés par ligne de liaison (VL);
- lorsque les quanta de valeur de trafic (vq) additionnés dépassent l'une des valeurs de trafic de ligne de liaison (vlv), les quanta de valeur de trafic (vq) suivants de la relation de trafic (vb) concernée sont affectés aux lignes de liaison (VL) intégrées dans la route (R2 à Rr) optimale suivante dans chaque cas;
- lorsqu'une valeur de trafic de relation de trafic (vbv) tombe en dessous d'une valeur donnée, il est mis fin à l'affectation de quanta de valeur de trafic (vq) pour chaque relation de trafic concernée (vb);
- les quanta de valeur de trafic (vq) d'une relation de trafic (vb) affectés aux routes (R) sont additionnés pour obtenir des valeurs de distribution de trafic (dw) individuellement pour chaque route;
- pour chaque noeud source de réseau et de transit de réseau (UNK, TNK) pertinent au regard de la relation de trafic, les valeurs de distribution de trafic (dw) sont additionnées et normalisées conformément à une valeur statistique inférieure et une valeur statistique supérieure (UW, OW) pour obtenir des informations de routage (ri).

2. Procédé selon la revendication 1, **caractérisé en ce que** la taille du quantum (vq) de valeur de trafic est mise en accord avec la capacité des lignes de liaison (VL) et la taille de la valeur de trafic de relation de trafic (vbv).

3. Procédé selon la revendication 1 ou 2, **caractérisé en ce que**, étant donné une commutation paritaire de toutes les relations de trafic (vb) dans le réseau de communication (KN), une valeur de même taille est affectée aux quanta de valeur de trafic (vq) à affecter.

4. Procédé selon la revendication 1 ou 2, **caractérisé en ce que**, étant donné une commutation priorisante de relations de trafic (vb) dans le réseau de communication (KN), une valeur supérieure (w) par rapport aux quanta de valeur de trafic (vq) des relations de trafic non priorisées (vb) est affectée aux quanta de valeur de trafic (vq) des relations de trafic (vb) à prioriser.

5. Procédé selon l'une des revendications précédentes, **caractérisé en ce que** les informations de routage (ri) représentent une information d'acheminement servant à la commutation, déterminant la ligne de liaison (VL) affectée à la route (R) sélectionnée et agissant dans la direction du noeud cible (ZNK).

6. Procédé selon l'une des revendications précédentes, **caractérisé en ce que** l'information de routage (ri) représente une information d'acheminement servant à la commutation et sélectionnant une route (R) unidirectionnelle ou bidirectionnelle.

7. Procédé selon l'une des revendications précédentes, **caractérisé en ce que** les 1 à maximum r routes (R) optimales sont déterminables en dépendance d'une qualité minimale ou maximale de lignes de liaison (VL), d'une capacité de transmission maximale des lignes de liaison (VL) individuelles, d'un nombre maximal de lignes de liaison (VL) pouvant être agencées en série et/ou de noeuds de réseau (NK).

8. Procédé selon l'une des revendications précédentes, **caractérisé en ce que**, dans le cadre de l'établissement d'une liaison pour une relation de trafic (vb), d'un noeud source de réseau vers un noeud cible de réseau (UKN, ZNK), une valeur de distribution aléatoire (zz) comprise entre la valeur inférieure de distribution statique et la valeur supérieure de distribution (UW, OW) est définie dans les noeuds source de réseau et les noeuds de transit de réseau (UKN, ZKN), et comparée avec les informations de routage (ri) et **en ce qu'**en dépendance du résultat de la comparaison la relation de trafic (vb) est commutée à la ligne de liaison (VL) déterminée par la valeur de distribution aléatoire.

9. Arrangement pour l'établissement d'informations de routage (ri) pour des relations de trafic (vb) dans un réseau de communication (KN) de topologie quelconque avec n noeuds de réseau (NK) et m lignes de liaison (VL) avec une valeur de trafic de ligne de liaison (vlv) donnée dans chaque cas, dans lequel 1 à maximum r routes (R) optimales bidirectionnelles sont déterminées pour chaque relation de trafic (vb) de chacun des n noeuds de réseau vers chacun des autres n-1 noeuds de réseau, une valeur de trafic de relation de trafic (vbv) étant définie pour chaque relation de trafic (vb), **caractérisé en ce que**, dans le réseau de communication (KN), des moyens sont réalisés de manière telle que
- un quantum de valeur de trafic (vq) est affecté à chaque ligne de liaison (VL) intégrée dans la première route optimale (R1) et est soustrait de la valeur de trafic de relation de trafic (vbv) concernée;
- l'affectation et la soustraction des quanta de valeur de trafic (vq) sont répétées, les quanta de valeur de trafic (vq) affectés étant additionnés par ligne de liaison (VL);
- lorsque les quanta de valeur de trafic (vq) additionnés dépassent l'une des valeurs de trafic de ligne de liaison (vlv), les quanta de valeur de trafic (vq) suivants de la relation de trafic (vb) concernée sont affectés aux lignes de liaison (VL) intégrées dans la route (R2 à Rr) optimale suivante dans chaque cas;
- lorsqu'une valeur de trafic de relation de trafic (vbv) tombe en dessous d'une valeur donnée, il est mis fin à l'affectation de quanta de valeur de trafic (vq) pour chaque relation de trafic concernée (vb);
- les quanta de valeur de trafic (vq) d'une relation de trafic (vb) affectés aux routes (R) sont additionnés individuellement pour chaque route pour obtenir des valeurs de distribution de trafic (dw);
- pour chaque noeud source de réseau et de transit de réseau (UNK, TNK) pertinent au regard de la relation de trafic, les valeurs de distribution de trafic (dw) sont additionnées et normalisées conformément à une valeur statistique inférieure et une valeur statistique supérieure (UW, OW) pour obtenir des informations de routage (ri).
